# EUROPÄISCHE PATENTANMELDUNG

(11) **EP 1 652 743 A2**
(43) Veröffentlichungstag der Anmeldung: **03.05.2006**
(21) Anmeldenummer: 05023738.7
(22) Anmeldetag: 31.10.2005
(51) Int. Cl.: B60S 3/00, B60S 3/06

(54) **Vorrichtung zur Aussenwäsche von Kraftfahrzeugen**

(30) Priorität: 02.11.2004 DE 102004053357
(71) Anmelder: Moby Clean GmbH & Co. KG, 45525 Hattingen (DE)
(72) Erfinder: Arns, Heiko Wolfgang, 42117 Wuppertal (DE)
(74) Vertreter: Füssel, Michael

(57) **Zusammenfassung**

Die Erfindung betrifft eine Fahrzeugwaschanlage in Form eines Anhängers (1).

## Beschreibung

Die Erfindung betrifft eine Vorrichtung zur Außenwäsche von Kraftfahrzeugen nach Oberbegriff des Anspruchs.

Derartige Vorrichtungen sind allgemein bekannt als Waschanlagen für PKW's und für LKW's.

Darüber hinaus betrifft die Erfindung ein Verfahren zum Gebrauch einer derartigen Vorrichtung.

Gattungsgemäße Vorrichtungen der oben beschriebenen Art zur Außenwäsche von Kraftfahrzeugen einschließlich Lastkraftwagen sind nach dem Stand der Technik im Freien oder in Waschhallen aufgestellt. Die Waschhallen sind geräumig genug, um einem Fahrzeug die Ein- und Ausfahrt bzw. die Durchfahrt zu ermöglichen. So beträgt beispielsweise die Deckenhöhe derartiger Waschhallen für LKW's mindestens sechs Meter, während ihre Breite bei über vier Metern liegen muß.

In diesen Waschhallen sind diese Vorrichtungen, im folgenden auch Waschportale genannt, üblicherweise auf Schienen verfahrbar aufgestellt und werden zur Reinigung eines in der Halle frei stehenden Kraftfahrzeugs in dessen Längsrichtung, ein- oder gegebenenfalls mehrfach hin und her verfahren.

Es liegt auf der Hand, daß derartig große Waschhallen und ihre darin aufgestellten Waschportale teuer sind. Eine kostendeckende Auslastung ergibt sich aber nur im Dauerbetrieb bei großen Speditionen. Da die Vielzahl kleiner Speditionsunternehmen aber häufig erhebliche Anfahrtswege und - zeiten zu bewältigen haben, um die Waschhallen zu erreichen, wird die Reinigung dieser Fahrzeuge teuer und daher oft hinausgezögert, obwohl eine Säuberung des Fahrzeugs aus optischen aber auch aus Umweltschutzgründen geboten wäre.

Der Erfindung liegt daher die Aufgabe zugrunde, die bekannte Vorrichtung so zu verbessern, daß sie unter verringertem Aufwand und unter Erhöhung der Auslastung praktisch vielseitiger einsetzbar ist.

Darüber hinaus liegt der Erfindung die Aufgabe zugrunde, ein Verfahren zu schaffen, mit dessen Hilfe der Gebrauch einer derartigen Vorrichtung vielseitiger ist.

Diese Aufgabe wird gelöst mit den Merkmalen des Hauptanspruchs und des Anspruchs 23.

Der Grundgedanke besteht darin, daß der zumindest eine Portalmast zwischen einer im wesentlichen horizontalen und einer im wesentlichen vertikalen Lage verschwenkbar am Maschinengestell angeordnet ist. Sind jedoch zwei Portalmasten vorgesehen, ist der Abstand der Fußpunkte der Portalmasten zueinander soweit veränderbar, daß die lichte Weite zwischen den Portalmasten in auseinandergefahrenem Zustand größer als die tatsächliche Breite des betreffenden Fahrzeugs, z.B. eines LKW, ist, während die Breite der Waschanlage über alles im zusammengefahrenen Zustand nicht größer als die zulässige Breite eines für den öffentlichen Straßenverkehr ohne Ausnahmegenehmigung zulässigen Anhängers, vorzugsweise PKW-Anhängers, ist.

Die Fußpunkte der Portalmasten können sich an zwei parallel zueinander verlaufenden horizontalen Sockeln befinden, welche das Maschinengestell bilden. Erfindungswesentlich ist also, daß der bzw. die Portalmast(en) aus der vertikalen in die horizontale Lage und zurück verschwenkbar ist/sind und daß - bei zwei Portalmasten - der Abstand der Portalmasten im Sinne der Straßenverkehrszulassungsordnung zueinander verringerbar ist.

Durch die verschwenkbare Anordnung des einen bzw. der beiden Portalmasten an einem bzw. an zwei in Gebrauchslage seitlich zur Waschanlage und parallel zueinander verlaufenden horizontalen Sockeln, deren Abstand zueinander veränderbar ist, gelingt es auf überraschend einfache Weise, die räumlichen Abmessungen des Waschportals so zu verringern, daß es in zusammengelegtem Zustand nach Art eines normalen Anhängers, vorzugsweise eines PKW-Anhängers, ohne besondere Einschränkungen an den jeweils gewünschten Einsatzort transportiert werden kann. Dabei greift die Erfindung auf übliche Fahrzeugwaschanlagen zurück, so daß gleichzeitig sichergestellt ist, daß die gleiche Reinigungswirkung wie bei einer fest installierten Waschanlage erreicht wird.

Die Abmessungen des Waschportals in transportfähigem Zustand liegen bei einer Breite von weniger als zwei Metern, einer Länge von etwa vier Metern und einer Höhe von etwa zwei Metern, so daß zum Transport nach Art eines normalen Anhängers - zum Beispiel PKW-Anhängers -, keinerlei Einschränkungen gegeben sind.

Nach dem Erreichen des jeweiligen Einsatzortes wird das Waschportal mit Hilfe der erwähnten Sockel auf dem ebenen Untergrund eines Parkplatzes oder Speditionshofes aufgestellt, wo in der Regel unterirdische Auffangbecken zum Auffangen und Behandeln der Waschflüssigkeit beispielsweise mit Hilfe von Ölabscheidern vorhanden sind. Außerdem stehen dort auch die erforderlichen Anschlüsse für Wasser, Strom oder Druckluft zur Verfügung, so daß das Waschportal problemlos betrieben werden kann. Andererseits ist es selbstverständlich auch möglich, die Versorgung des Waschportals mit Waschflüssigkeit, Druckluft oder Strom mit Hilfe transportabler Tanks, Kompressoren oder Generatoren an Ort und Stelle zu gewährleisten und zur Entsorgung separate Auffangbecken und Fässer zu verwenden.

Um das Waschportal in einen betriebsbereiten Zustand zu versetzen, werden zunächst die liegenden Portalmasten, die an den Sockeln beispielsweise mittels eines Gelenks befestigt sind, in ihre aufrechte Lage verschwenkt und in dieser Lage z. B. mit Hilfe von Sicherungsbolzen fixiert. Anschließend wird der Abstand der Portalmasten bzw. der Sockel unter Streckung des Portalbogens derart eingestellt, daß das zu reinigende Fahrzeug mit dem gewünschten Seitenabstand zwischen die Portalmasten und mit dem gewünschten Höhenabstand unter den Portalbogen paßt. Alternativ kann auch vorgesehen sein, zunächst die Sockel unter Streckung des Portalbogens auseinanderzufahren und anschließend die Portalmasten in ihre aufrechte Lage zu verschwenken. Beide Bewegungsabläufe können auch gleichzeitig erfolgen. Der Abstand der Portalmasten kann ebenso wie der Bewegungsablauf zum Hin- und Herverschwenken auch mittels eines Trieborgans wie z. B. einer Gewindespindel einstellbar sein.

Zum Verfahren des Waschportals in Längsrichtung des stehenden Fahrzeugs weisen die Sockel, an denen die Portalmasten angelenkt sind, vorzugsweise motorisch antreibbare Rollen oder Räder auf, die gegebenenfalls auch verschwenkbar sein können, so daß sie beispielsweise mit Hilfe von durch Abstandssensoren angesteuerten Stellantrieben gelenkt werden können, um die Sockel während des Hin- und Herfahrens in Längsrichtung des Fahrzeugs exakt parallel zu diesem führen zu können. Auch mobil zu verlegende Schienen zur Zwangsführung der Rollen können dazu verwendet werden.

Bei einer besonders vorteilhaften Ausführung der erfindungsgemäßen Waschvorrichtung sind die Sockel als SeitenSockel des Fahrgestells eines PKW-Anhängers ausgebildet. Bei dieser Konstruktion können dann die Laufräder des Anhängers jeweils an den Außenseiten der Portalmasten mittels entsprechender Achsstummel befestigt sein. Auf diese Weise könnten die Laufräder sogar die Funktion der Rollen übernehmen.

Die Sockel, mit deren Hilfe das Waschportal kippsicher auf dem Boden verfahren werden kann, können an ihrem vorderen, das heißt an ihrem den Anhänger ziehenden Fahrzeug zugewandten Ende quer zur Fahrtrichtung geteilt sein und dort über ein in der oberen Sockelebene vorgesehenes Knickgelenk hochgeklappt werden, so daß die Länge der Vorrichtung in ihrem Transportzustand verringert wird. Dann können die hochgeklappten Endbereiche der Sockel vorteilhafterweise ein Widerlager bilden, gegen das die Enden der in die Horizontale nach hinten umgelegten Portalmasten anliegen, so daß sich eine kompakte Transporteinheit bildet.

Zum Sichern der Sockelenden in ihrer während des Betriebszustandes des Waschportals horizontalen und während des Transportzustands vertikalen Lage können wiederum z.B. von der Seite eingesteckte Verriegelungsbolzen verwendet werden.

Die Deichsel, mit deren Hilfe das liegende und transportfähige Waschportal an das Zugfahrzeug angekoppelt werden kann, ist zweckmäßigerweise lösbar mit dem Fahrgestell des Anhängers verbunden, so daß sie vor Inbetriebnahme des Waschportals abgenommen oder zumindest aus der Fahrspur herausgeschwenkt werden kann.

Der Portalbogen, der den oberen Abschluß des betriebsbereiten Waschportals bildet, kann gegebenenfalls mit Hilfe von Steckverbindungen auf die Portalmasten aufgesteckt bzw. von den Portalmasten heruntergenommen werden. Andererseits ist es auch möglich, ihn über jeweils ein Gelenk mit horizontaler Drehachse mit den Portalmasten zu verbinden, so daß er im Transportzustand des Waschportals um einen Winkel von bis zu 180° soweit in Richtung zum Fußende der Portalmasten verschwenkt werden kann, daß er äußerstenfalls mit seiner Rückseite auf dem Portalmasten zum Liegen kommt. Dies bietet den Vorteil, daß auf diese Weise die effektive Länge des Waschportals während des Transports entsprechend verkürzt wird. Die Sicherung des Portalbogens in der jeweiligen Stellung kann wiederum mit Hilfe von z.B. seitlich eingesteckten Verriegelungsbolzen erfolgen. Auch wenn der Portalbogen auf diese oder ähnliche Weise gelenkig mit den Portalmasten verbunden ist, kann er mit Hilfe einer Teleskopverbindung so auseinander- oder zusammengefahren werden, daß die Abstandseinstellung der Portalmasten auf die jeweilige Fahrzeugbreite möglich ist.

Der Portalbogen verfügt in betriebsbereitem Zustand über eine rotierend gelagerte Kopfbürste mit horizontaler Drehachse, die vertikal mit Hilfe von sich in Längsrichtung der Portalmasten erstreckenden geeigneten Führungen und zugeordneten Antrieben verfahren werden kann. Diese Kopfbürste dient nicht nur zum Reinigen der Dachfläche des Fahrzeugs bzw. seiner Aufbauten, vielmehr kann sie aufgrund ihrer vertikalen Beweglichkeit auch zur Reinigung der Fahrzeug-Vorderfront bzw. seiner Rückseite verwendet werden. Die Kopfbürste kann herausnehmbar in entsprechende Halteeinrichtungen der Portalmasten einsetzbar sein, es ist jedoch auch möglich, sie mit Hilfe eines mittigen Gelenks zusammenklappbar auszubilden, so daß sich ihre beiden Seitenhälften beim Zusammenfahren der Portalmasten gegeneinander legen.

Um zu verhindern, daß die rotierenden Seitenbürsten während des Waschvorgangs durch nach außen vorstehende Fahrzeugteile wie Spiegel oder Radkästen beschädigt werden oder diese beschädigen, sind sie vorzugsweise pendelnd im Waschportal aufgehängt, so daß sie durch entsprechende Druckbeaufschlagung selbsttätig nach außen zurückweichen können. Darüber hinaus ist es auch möglich, ihre jeweilige Abstandslage zur Seitenfläche des LKWs mit Hilfe von Abstands- oder Drucksensoren zu regeln.

Die Gelenke, Antriebe und Lager des zusammenlegbaren Waschportals sind vorzugsweise mit Hilfe geeigneter Dichtungen oder Gehäuse vollständig gegen das Eindringen von Waschflüssigkeit geschützt, so daß ihre Funktionstüchtigkeit auch über lange Betriebszeiten nicht beeinträchtigt werden kann.

Die Portalmasten und der Portalbogen des Waschportals sind vorzugsweise als Fachwerkkonstruktionen ausgebildet und bestehen beispielsweise aus miteinander verschweißten Rohrprofilen. Dadurch weist die Vorrichtung bei guter Festigkeit und Standsicherheit ein niedriges Gewicht auf. Der Querschnitt der Portalmasten besitzt beispielsweise die Form eines U, das sich nach innen, das heißt zum abgestellten Kraftfahrzeug, öffnet. Dadurch können die Seitenbürsten in der Transportstellung in den Profilen untergebracht werden, wobei in der Gebrauchsstellung ihre sich durch Fliehkräfte aufrichtenden Bürstenfasern auf der offenen Seite des U ohne Hindernisse mit der Außenseite des zu waschenden Fahrzeugs in Kontakt gebracht werden können. Zu diesem Zweck wird vorgeschlagen, die Drehachsen der Seitenbürsten auf entsprechenden Führungen zu lagern, so daß die Seitenbürsten ihrem jeweiligen Gebrauchszweck entsprechend verlagerbar sind.

Bevorzugt können die Antriebe zum Verfahren des Waschportals, zum Antreiben der Bürsten und Trieborgane, zum Verfahren der Kopfbürste, zum Verschwenken der Portalmasten und zum Hochklappen der Sockelnden als Hydraulik- oder Pneumatikantriebe ausgebildet sein, so daß keine elektrischen Isolationsprobleme auftreten. Bei pneumatischen Antriebsmotoren besteht darüber hinaus der Vorteil, daß mit Hilfe der entsprechenden Druckluftversorgung gleichzeitig auch die erforderliche Waschflüssigkeit zu den Düsen, die seitlich im Kopfbereich des Waschportals und an dem Portalmasten befestigt sein können, befördert werden kann. Die Spritzrichtung dieser Düsen kann teilweise so gewählt sein, daß die Waschflüssigkeit in Fahrtrichtung des Waschportals gesehen vor den Bürsten auf die Außenfläche des LKWs auftritt, so daß ein gewisser Einweicheffekt gegeben ist und der Schmutz durch die rotierenden Bürsten leichter abgewaschen werden kann. Ein weiterer Teil der Düsen ist direkt auf die Bürsten gerichtet, so daß diese über ihre gesamte Länge befeuchtet werden und selbst durch Ablaufen oder Abschleudern der Flüssigkeit vom Schmutz gereinigt werden.

Nach dem Waschen des Fahrzeugs mit einer Reinigungsflüssigkeit, die die entsprechenden Tenside oder Bleichmittel enthalten kann, können die Düsen des Waschportals beim Zurückfahren zum Beispiel mit entsalztem Spülwasser, auch als Osmosewasser bezeichnet, versorgt werden. Dieses Wasser, das im vorliegenden Fall mit Hilfe eines mobilen Ionenaustauschers hergestellt werden kann, weist eine sehr niedrige Leitfähigkeit auf und hat eine hohe Oberflächenspannung, die dazu führt, daß die Waschflüssigkeit auf der Außenseite nahezu vollständig verdrängt wird und das Spülwasser selbst leicht abtropft. Darüber hinaus können zum Trocknen des Fahrzeugs auch sogenannte Hydrophobierungsflüssigkeiten eingesetzt werden, die aus wachshaltigen Dispersionen bestehen.

Bei einer weiteren Ausgestaltung der Erfindung ist es zusätzlich auch möglich, Blasleisten an den Portalmasten bzw. dem Portalbogen anzubringen, die mit Hilfe von Druckluft die Trocknung des gewaschenen Fahrzeugs beschleunigen.

Zum äußerst umweltfreundlichen Betrieb der Anlage wird zusätzlich vorgeschlagen, zumindest optional ein Auffangbecken vorzusehen, in welchem sich die anfallende Waschflüssigkeit vor der Weiterbearbeitung sammeln soll.

Das Auffangbecken weist eine druckstabile Fahrbahn für das zu waschende Fahrzeug auf und eine dem jeweiligen Wasseranfall angepaßte Umrandung.

Wird beispielsweise mit einem Wasserbedarf zum reinigen eines LKW von etwa 250 Liter gerechnet, muß die Höhe der Umrandung entsprechend ausgelegt sein, um ein Überlaufen des Wassers zu verhindern.

Das Auffangbecken kann aus mehreren Einzelteilen oder einstückig, in jedem Fall aber zusammenlegbar konstruiert sein, so daß es im Umfang der vorliegenden Erfindung auch einfach transportierbar ist.

Das Auffangbecken weist zweckmäßigerweise an einer Stelle eine Absaug-/Ablauföffnung auf für das Schmutzwasser.

Von dort soll eine Leitung über geeignete Filtereinheiten, bestehend aus Grobfilter, Feinfilter und Abscheider abgehen, so daß das entsprechend gereinigte Schmutzwasser erneut in den Waschwasserkreislauf zurückgeführt werden kann.

Hierzu sind entsprechende Leitungen und Pumpen vorgesehen, mit deren Hilfe die herausgefilterten Schmutzstoffe zweckmäßigerweise in separaten Behältnissen zur Entsorgung untergebracht werden können.

Sofern also die vorliegende Erfindung in Verbindung mit einem Auffangbecken Verwendung findet, ist das Auffangbecken mit Absaugeinrichtungen auszurüsten, mit deren Hilfe ablaufende Waschflüssigkeit aufgefangen und vorzugsweise nach Schmutzstoffen und wiederverwendbarem Waschwasser separiert in separate Tanks rückgeführt werden kann. Auf diese Weise kann eine unnötige Belastung des Untergrunds mit Waschflüssigkeit weitgehend vermieden werden.

Nach der Beendigung des Waschvorgangs werden die Portalmasten zusammengefahren und aus ihrer vertikalen in die horizontale Lage verschwenkt, so daß die gesamte Vorrichtung nunmehr erfindungsgemäß nach Art eines zum öffentlichen Straßenverkehr zugelassenen Anhängers, vorzugsweise PKW-Anhängers, abtransportiert werden kann.

Geht man einmal davon aus, daß die vorliegende Erfindung auch in Form von z.B. Nutzungsverträgen durch Dritte Verwendung finden kann, bedarf es einer Möglichkeit zur exakten Nachvollziehbarkeit an durchgeführten Waschvorgängen als Abrechnungsgrundlage.

Zu diesem Zweck wird vorgeschlagen, daß die Vorrichtung kombiniert wird mit einem Zählwerk zum Zählen der insgesamt durchgeführten Waschvorgänge.

Ein derartiges Zählwerk kann z.B. aus einer Induktionsschleife bestehen, die sich in der Fahrbahn des Waschportals befindet und mit einem Ein-Aus-Schalter kommuniziert.

Die Voraussetzung zum Einschalten des Waschportals, und damit zum Starten des Waschvorgangs, ist ein positives Signal der Induktionsschleife, so daß sich ein Fahrzeug im Fahrbahnbereich befinden muß.

Ist der Waschvorgang beendet, d.h., ist das Waschprogramm abgelaufen, wird das Zählwerk beim nächsten Neustart um EINS weitergezählt, sofern ein entsprechendes Signal der Induktionsschleife vorliegt.

Im folgenden wird die Erfindung anhand von Ausführungsbeispielen näher erläutert. Es zeigen:
- Fig.1: eine schematische Seitenansicht eines PKW-Anhängers mit einem erfindungsgemäßen Waschportal,
- Fig.2: eine Draufsicht auf den PKW-Anhänger gemäß Fig.1,
- Fig.3: eine schematische Seitenansicht des PKW-Anhängers gemäß Figur 1 und 2 mit drei unterschiedlichen Positionen des Waschportals,
- Fig.4: eine Ansicht des Waschportals beim Auseinanderfahren,
- Fig.5: eine Rückansicht des Waschportals in Betriebsstellung,
- Fig.6: eine Seitenansicht des Waschportals gemäß Fig.5.
- Fig.7: ein weiteres Ausführungsbeispiel der Erfindung,
- Fig.8: Detailansicht einer möglichen Deichselkonstruktion, und
- Fig.9: ein weiteres Ausführungsbeispiel der Erfindung mit separatem Fahrgestell.

Sofern im folgenden nichts anderes gesagt ist, gilt die folgende Beschreibung stets für alle Figuren.

Die Figuren zeigen eine Vorrichtung zur Außenwäsche von Kraftfahrzeugen.

In einer bevorzugten Ausführungsform geht es dabei um die Außenwäsche von Lastkraftwagen sowie von deren Aufbauten, Anhängern oder Aufliegern.

Eine derartige Vorrichtung weist ein Maschinengestell 100 auf, welches in Längsrichtung der Kraftfahrzeuge verfahrbar ist und darüber hinaus einen sich in Gebrauchslage der Vorrichtung seitlich neben dem Kraftfahrzeug befindlichen und aufrecht erstreckenden Portalmast 2 aufweist.

In der Gebrauchslage befindet sich am oberen Ende des Portalmastes ein kopfseitig angeordneter Portalbogen 6.

Der Portalmast weist eine drehbar gelagerte Seitenbürste 20,21 auf, deren Drehachse in Gebrauchsstellung im wesentlichen vertikal verläuft.

Der Portalbogen 6 erstreckt sich in horizontaler Richtung quer über das zu waschende Fahrzeug und weist hierzu eine um eine horizontale Achse drehbar gelagerte Kopfbürste 19 auf.

Die Kopfbürste und die Seitenbürste sind bekannterweise über Düsen mit Waschflüssigkeit zu beaufschlagen.

Weiterhin sind Antriebsmotoren zum Antreiben der Bürste(n) und zum Verfahren des Maschinengestells vorgesehen.

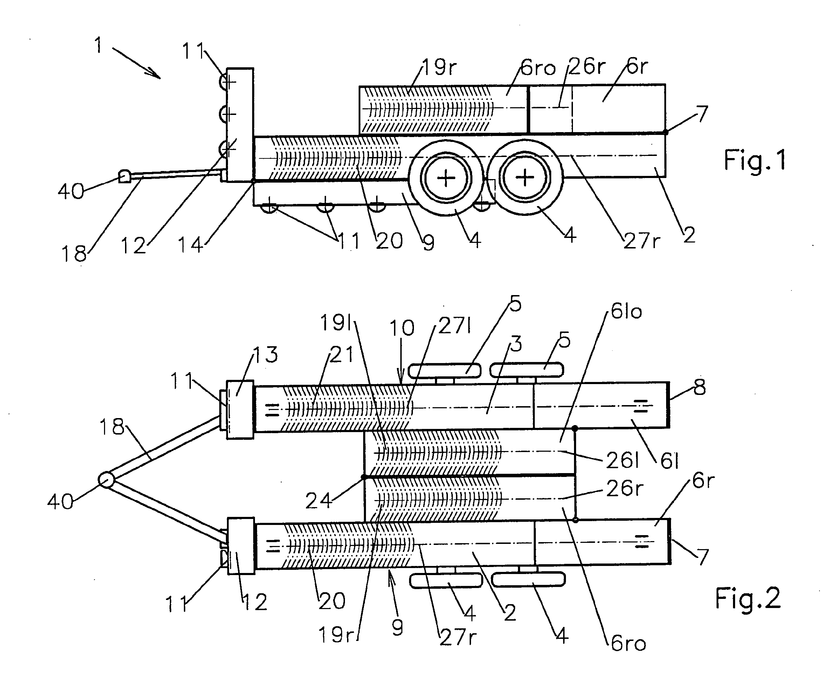

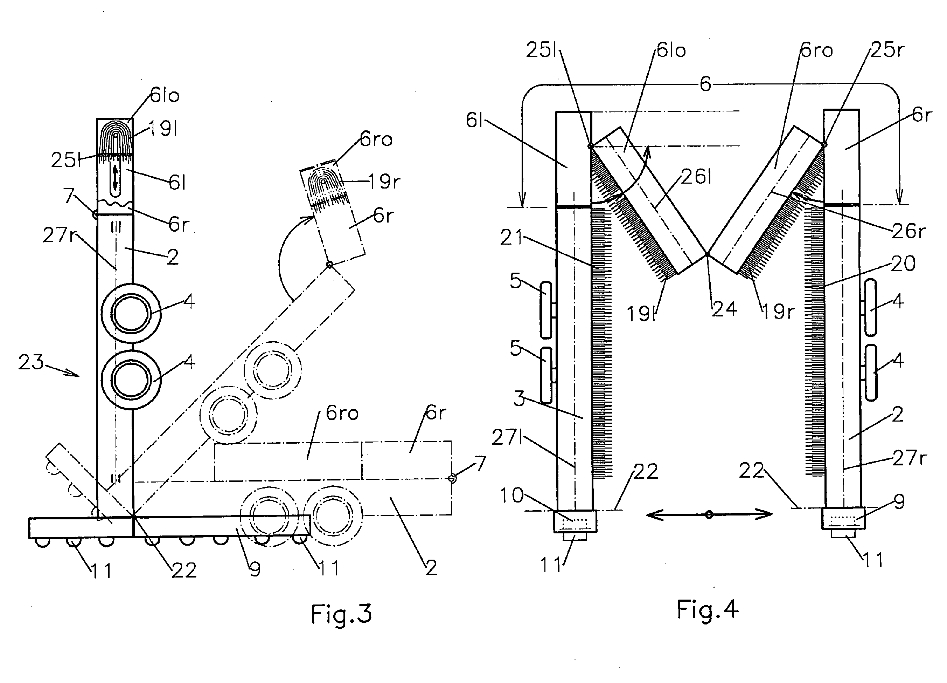

Wesentlich ist nun, daß der Portalmast 2;3 zwischen einer liegenden Position entsprechend der Darstellung in Figuren 1 bis 3, 7 und 9 und einer stehenden Position entsprechend der Darstellung in den Figuren 4 bis 6 verschwenkbar an dem Maschinengestell 100 angeordnet ist.

Der Portalmast 2 kann daher bei ordnungsgemäß auf dem festen Untergrund aufgestellten Maschinengestell 100 zwischen seinen beiden Endpositionen so verschwenkt werden, daß in der liegenden Position die Länge der gesamten Vorrichtung im Prinzip der Höhe der Vorrichtung in der aufrecht stehenden Position entspricht.

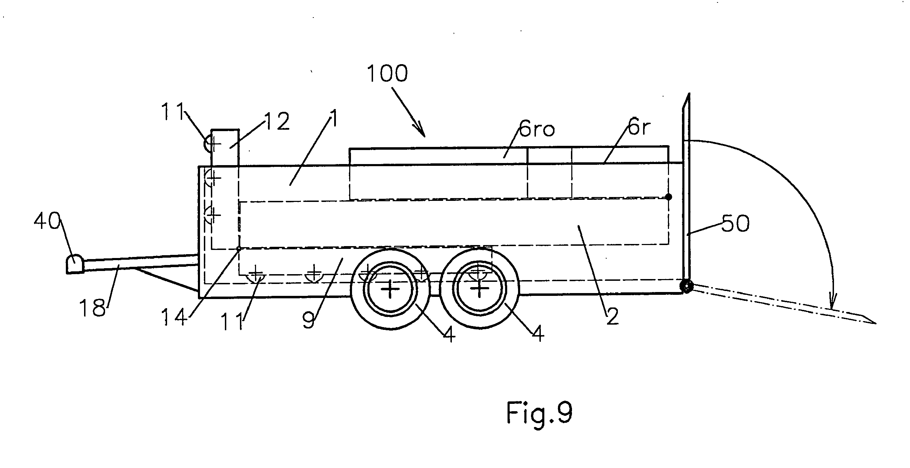

Zudem ist das Maschinengestell 100 ortsunabhängig auf jedem festen Untergrund verfahrbar und darüber hinaus entsprechend den Darstellungen in Figuren 1 bis 3 und 7 entweder Bestandteil eines mit einer luftbereiften Achse verbundenen Fahrgestells eines für den öffentlichen Straßenverkehr zugelassenen Anhängers oder entsprechend der Darstellung in Fig.9 mit einigen wenigen Handgriffen mit einem derartigen Fahrgestell verbindbar und davon auch wieder lösbar.

Wesentlich ist also die Möglichkeit, die einzelnen Bestandteile des Waschportals an dem zugehörigen Maschinengestell so anzuordnen, daß die für den öffentlichen Straßenverkehr nicht mehr zulässige übliche Höhe über alles durch einige wenige Handgriffe verringert werden kann, daß keinerlei Sondergenehmigung zum Transport mehr erforderlich ist, während dies in gleichem Maße für die Breite über alles gilt.

Insofern können die gezeigten Ausführungsbeispiele selbstverständlich nicht alle nur denkbaren Möglichkeiten geeigneter Konstruktionen darstellen.

Wesentlich ist aber die Doppelfunktion der erfindungsgemäßen Vorrichtung, eines problemlos handhabbaren Anhängers einerseits und einer Kraftfahrzeugwaschanlage andererseits.

Dabei ermöglicht die Erfindung, daß an sich sperrige Waschportal so zerlegbar vorzusehen, daß die Abmessungen eines für den öffentlichen Straßenverkehr zugelassenen PKW-Anhängers nicht überschritten werden.

Obwohl dies keine Einschränkung der Erfindung auf dieses Ausführungsbeispiel bedeuten soll, sind trotzdem im folgenden stets nur PKW-Anhänger dargestellt.

Dies gilt insbesondere auch im Hinblick auf die bei PKW-Anhängern zulässigen maximalen Stützlasten, wozu zweckmäßigerweise die Laufräder des PKW-Anhängers etwa in der Schwerpunktsmitte des PKW-Anhängers anzuordnen sind.

Der in den Fig.1 und 2 schematisch dargestellte PKW-Anhänger 1 besteht im wesentlichen aus zwei liegenden Portalmasten 2,3, die in ihrer Mitte die Laufräder 4,5 des PKW-Anhängers 1 tragen. Ebenfalls am hinteren Ende der Portalmasten 2,3 befindet sich ein Portalbogen 6, der mittels der Gelenke 7,8 mit den Portalmasten 2,3 verbunden ist und in umgeklapptem Zustand oben auf den Portalmasten 2,3 aufliegt.

Im vorderen Bereich der Portalmasten 2,3 befinden sich auf deren Unterseite zwei Sockel 9,10, die an ihrer Unterseite Rollen 11 tragen.

Wie Fig.1 zeigt, ist der vordere, linke Endbereich 12,13 der Sockel 9,10 um Knickgelenke 14,15 hochgeklappt und liegt in vertikaler Stellung jeweils an den Stirnseiten 16,17 der Portalmasten 2,3 an.

Den vorderen Abschluß des PKW-Anhängers 1 bildet eine Deichsel 18, die lösbar am vorderen Ende des Anhängerfahrgestells befestigt ist.

Ergänzend hierzu sei erwähnt, daß anstelle zweier seitlich und parallel zueinander angeordneter Portalmasten 2,3 auch lediglich ein einziger Portalmast denkbar ist, der an seinem oberen Ende einen einseitig auskragenden Portalbogen 6 trägt.

Die Vorrichtung mit zwei Portalmasten 2,3 bietet allerdings den Vorteil, daß die Fahrzeugwäsche mit lediglich einer einzigen Hin- und Herfahrbewegung erledigt ist.

Am unteren Ende der Portalmasten befinden sich die Sockel 9,10, an denen sich auch die Rollen 11 befinden, um das in Gebrauchsstellung befindliche Waschportal in Längsrichtung des Fahrzeugs hin- und herverfahren zu können.

Der Unterschied der Darstellungen gemäß Figuren 1,2 und 9 besteht darin, daß im ersteren Fall das Maschinengestell 100 zusammen mit den Sockeln 9,10 selbst Bestandteil des Fahrgestells des PKW-Anhängers 1 ist, während im Ausführungsbeispiel gemäß Fig.9 das Maschinengestell 100 zusammen mit den Sockeln 9,10 über die Auffahrrampen 50 mit einigen wenigen Handgriffen auf das Fahrgestell des Anhängers 1 aufladbar und von diesem auch wieder abladbar ist.

Im Falle der Figuren 1 und 2 bietet es sich insbesondere an, an den Sockeln 9,10 oder an den Portalmasten 2,3 die für den öffentlichen Straßenverkehr zugelassenen Laufräder 4,5 zu befestigen.

Im Gegensatz hierzu sind beim Ausführungsbeispiel gemäß Fig.9 lediglich die Rollen 11 Bestandteil der Waschanlage, da der PKW-Anhänger 1 separat über entsprechende Laufräder 4,5 verfügt.

Um die Länge über alles im Transportzustand so kurz wie möglich zu halten, ist es vorgesehen, an jedem Sockel 9,10 ein Gelenk 14,15 zum Hochklappen des Sockelendes dort vorzusehen, wo der Sockel dem ziehenden Fahrzeug mit seinem Endbereich 12,13 zugewandt ist.

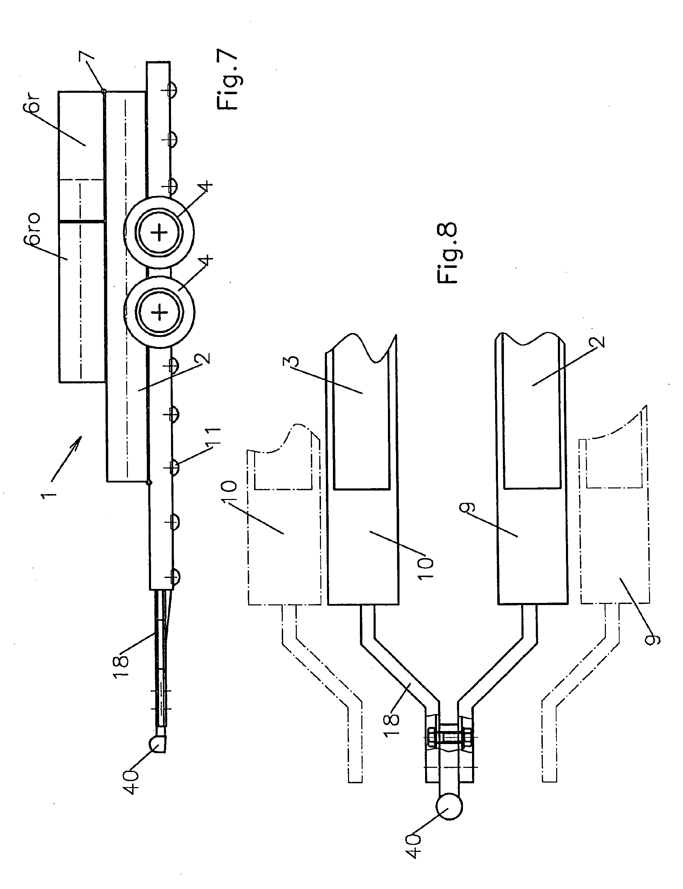

Ferner zeigt insbesondere Fig.8, daß das Fahrgestell 100 eine Deichsel 18 aufweist, die in der Betriebsstellung des Waschportals 23 aus der Fahrbahn des gewaschenen Fahrzeugs herausbewegbar ist.

Dem Ausführungsbeispiel gemäß Fig.8 wird dies dadurch erreicht, daß die Deichsel 18 aus zwei gegensinnig gekröpften Deichselstangen besteht, die über den gemeinsamen Kugelkopf 40 verbindbar sind, wenn das Waschportal 23 in die Transportstellung geklappt wurde.

In jedem Fall sollte jedoch die Deichsel 18 aus der Fahrbahn des zu waschenden Fahrzeugs herausbewegbar sein, wenn sich das Waschportal 23 in der Betriebsstellung befindet.

Ferner zeigen die Figuren, daß der Portalbogen 6 über eine horizontale Schwenkachse gelenkig mit den oberen Enden der Portalmasten 2,3 verbunden ist.

Die Schwenkachse bildet die Gelenke 7,8, so daß der Portalbogen 6 um einen Winkel von bis zu 180° relativ zur Längserstreckung der Portalmast 2,3 verschwenkbar ist.

Auf diese Weise läßt sich die Gesamtlänge der Vorrichtung in Transportstellung entsprechend verkürzen.

Wie man insbesondere anhand der Figuren 3 und 4 nachvollziehen kann, ist der Portalbogen 6 zusammengesetzt aus einem linken bzw. rechten Portalbogenstück 61 bzw. 6r, die sich beide in der Betriebsstellung des Waschportals parallel zu den Portalmasten 2,3 befinden.

Im Bereich der oberen Enden der Portalbogenstücke 61 bzw. 6r befinden sich weitere Gelenke 251 bzw. 25r, an welchen die in der Betriebsstellung quer verlaufenden oberen Portalbögen 6lo bzw. 6ro derart verschwenkbar angelenkt sind, daß sich beim Zusammenfahren des Waschportals 23 in die Transportstellung die Breite des dabei entstehenden KFZ-Anhängers über alles auf das äußerst mögliche Maß verringert.

In dieser Position liegen nämlich die oberen Portalbögen 6lo bzw. 6ro entsprechend Fig.2 mit ihren in Gebrauchsstellung nach oben weisenden Querflächen unmittelbar gegeneinander und bilden auf diese Weise ein kompaktes Anhängergebilde.

Dabei bleiben die Drehachsen 261 und 26r der jeweils hälftigen Kopfbürsten 191 bzw. 19r jeweils innerhalb der Gehäuse, die von den oberen Portalbögen 6lo bzw. 6ro gebildet werden, so daß die Kopfbürsten auch transportgerecht untergebracht sind.

Es versteht sich, daß die Drehachsen 261 bzw. 26r der Kopfbürsten auf geeignete Weise in Längsrichtung der Portalmasten 2,3 verfahrbar im Waschportal anzuordnen sind, um Front- und Heckseite eines entsprechend zu reinigenden Fahrzeugs über die gesamte Höhe säubern zu können.

Hierzu können auch mehrere Halteeinrichtungen vorgesehen sein, mit deren Hilfe die Kopfbürsten auch in unterschiedlichen Höhenlagen der Portalmasten festgelegt werden können.

Diese Maßnahme dient beispielsweise dem Zweck, die Kopfbürste(n) für die Außenwäsche von PKWs in niedrigerer Höhe vorzusehen als für LKWs.

Die Drehachsen der Kopfbürsten 191 bzw. 19r können im jeweils zugehörigen Portalbogen 6lo bzw. 6ro jeweils für sich gelagert sein.

Darüber hinaus ist auch möglich, die Drehachsen mittels eines oder mehrerer Kreuz- oder Knickgelenke zu koppeln.

Darüber hinaus ist es auch denkbar, die Drehbachse nach Art einer Pinole aus axialen Schiebestücken auszubauen, die in vorbestimmter Drehstellung ineinander passen und eine drehfeste Verbindung ergeben.

Wie insbesondere aus Figur 2 hervorgeht, befindet sich zwischen den parallel zueinander verlaufenden Portalmasten 2, 3 eine zusammengelegte Kopfbürste 19, während in den Portalmasten 2,3 Seitenbürsten 20,21 angeordnet sind.

Die Länge des PKW-Anhängers 1 einschließlich Deichsel 18 beträgt ca. 4 m und seine Breite maximal 2 m, so daß der PKW-Anhänger 1 ohne Einschränkungen auf öffentlichen Straßen benutzt werden kann.

Bei der Seitenansicht gemäß Fig.3 wird deutlich, wie die Portalmasten 2,3 mittels nicht dargestellter hydraulischer oder pneumatischer Antriebe um eine Drehachse 22 relativ zu den Sockeln 9,10 in eine vertikale Stellung verschwenkt werden können. Dabei wird gleichzeitig der Portalbogen 6 mit allen Bestandteilen 61,6r aus seiner liegenden Position relativ zu den Portalmasten 2,3 um 180° verschwenkt, so daß er in vertikaler Lage der Portalmasten 2, 3 mit diesen fluchtet und ihre Enden bogenförmig verbindet.

Darüber hinaus werden zum Erreichen der Betriebsstellung die vorderen Enden 12,13 der Sockel 9,10 um 90° nach unten verschwenkt, so daß dann die Sockel 9,10 mit ihrer gesamten Länge über die Rollen 11 auf dem Untergrund aufsitzen.

Bei der Ansicht gemäß Fig.4 ist das Waschportal 21 in einem Zustand dargestellt, bei dem die Portalmasten 2,3 noch nicht ihren maximalen Abstand erreicht haben und die Kopfbürste 19, die mittels des Gelenks 24 zusammengelegt werden kann, bezüglich ihrer Drehachse noch nicht die horizontale Stellung erreicht hat.

Der Portalbogen 6 kann aus teleskopierend ineinandergreifenden Teilen bestehen, so daß der Abstand der Portalmasten 2,3 zueinander verändert werden kann.

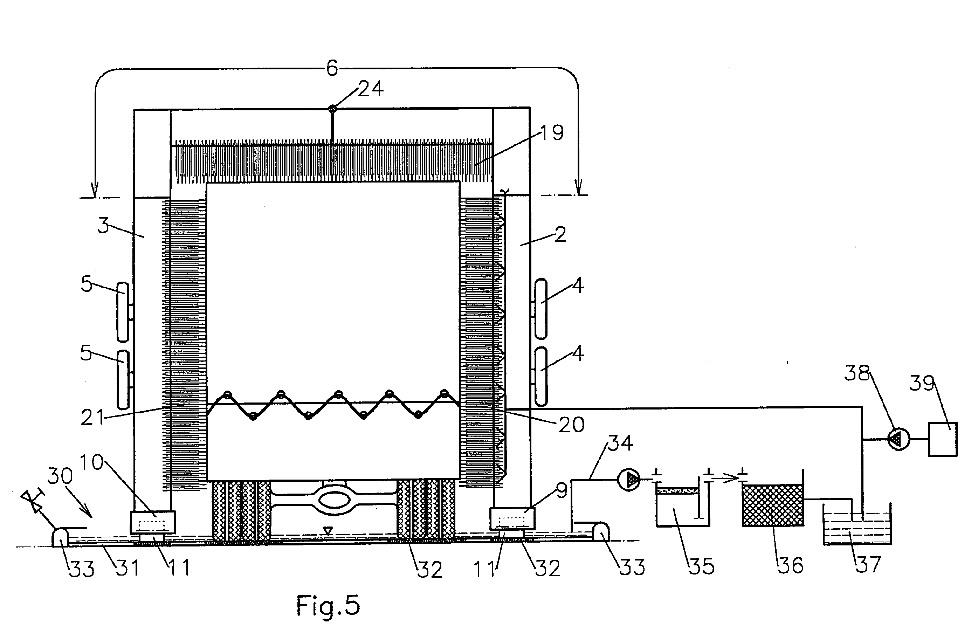

Die auseinandergefahrene Betriebsposition des Waschportals 23 ist in Figur 5 in der Rückansicht gezeigt.

Dabei befindet sich die Kopfbürste 19 in gestrecktem Zustand und kann mittels nicht dargestellter Antriebe in Längsrichtung der Portalmasten 2,3 verfahren werden. In den Portalmasten 2,3 sind die Seitenbürsten 20, 21 angeordnet.

Das Waschportal 23 ist in der Betriebsstellung ca. 5,6 m hoch, während der Abstand der Portalmasten 2,3 2,8 m beträgt, so daß alle gängigen LKW-Aufbauten gewaschen werden können.

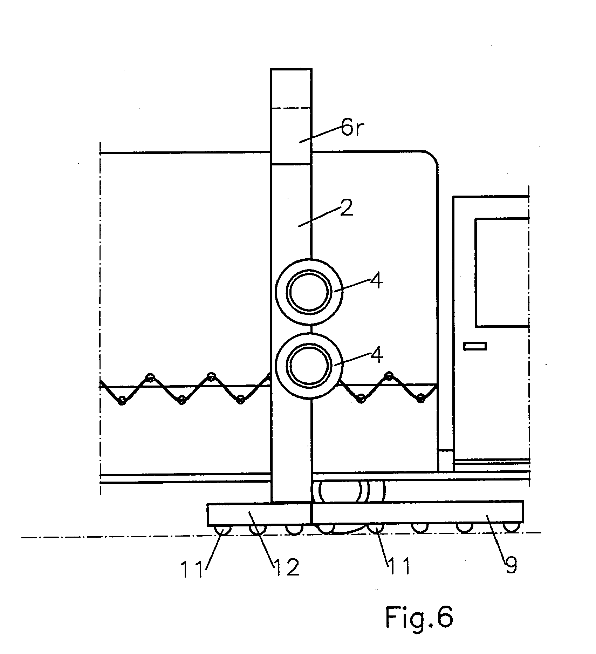

Das Waschportal 23 gemäß Fig.5 wird in Fig.6 in einer Seitenansicht gezeigt. Die Länge des Sockels 9 beträgt ca. 3,6 m und die Breite des Portalmasten 2 bzw. 3 liegt bei 1,2 m, so daß genügend Raum zur Unterbringung der Seitenbürsten 20,21 vorhanden ist.

Insbesondere zur Verwendung der Vorrichung zur Außenwäsche von PKWs wird vorgeschlagen, daß die Seitenbürsten 20,21 pendelnd an den Portalmasten 2,3 gelagert sein sollen.

Auf diese Weise wird erreicht, daß durch die Pendelbewegung der Seitenbürste schmalere Stellen der KFZ-Karosserie, z.B. im Dachbereich oder im Bereich der Seitenschürzen einfacher erreicht werden können und trotzdem der zur wirksamen Reinigung notwendige Druck durch die Waschbürsten erzielt wird.

Zweckmäßigerweise sind alle Gelenke, Antriebe und Lagerstellen des Waschportals und der Bürsten vollständig gegen das Eindringen von Waschflüssigkeit geschützt. Wird der Portalbogen als Teleskop ausgebildet, bietet es sich zudem an, den Abstand der Sockel 9,10 bzw. der Portalmasten 2,3 voneinander mittels eines oderer mehrerer Antriebe veränderbar zu machen.

Auf diese Weise läßt sich das Waschportal einfach an die übliche Außenbreite der zu waschenden Fahrzeuge angleichen. Sind die Portalmasten bzw. der Portalbogen als Fachwerkkonstruktion ausgeführt, ergibt sich eine leichte Bauweise, die auch für die Verwendung einer LKW-Waschanlage als PKW-Anhänger geeignet ist.

Zudem lassen sich die Fachwerkkonstruktionen mit U-förmigigem Querschnitt ausstatten, der in Richtung zum zu waschenden Fahrzeug offen ist, so daß die jeweiligen Bürsten einfach in die offene Seite der Fachwerkkonstruktionen hinein gefahren werden können, wenn sich das Waschportal in der Transportstellung befindet.

Zweckmäßigerweise sind alle Antriebe als wartungsfreie Pneumatik-Motoren ausgebildet. Dies gilt insbesondere für Antriebe der Bürsten und, sofern vorgesehen, auch für die Antriebe zum Verschwenken der Portalmasten und ggf. auch des Portalbogens.

Zusätzlich können auch horizontal und vertikal ausgerichtete Blasleisten vorgesehen sein, um das gewaschene Fahrzeug durch die aus den Blasleisten ausströmende Preßluft zu trocknen.

Darüber hinaus zeigt insbesondere Fig.5 eine Weiterbildung. Dort befindet sich unterhalb des Waschportals ein Auffangbecken 30, welches mit einem umlaufenden Rand versehen ist.

Der umlaufende Rand kann aus einem aufblasbaren Kunststoff bestehen und bildet die Umrandung eines Bodens 31, in welchem auf geeignete Weise eine druckfeste Fahrbahn 32 für das zu waschende Fahrzeug und die Laufrollen des Waschportals 23 integriert ist.

Die Umrandung 33 bildet zusammen mit dem Boden 31 ein flüssigkeitsdichtes Auffangbecken 30, in welchem sich die anfallende Waschflüssigkeit sammelt.

Ein Absaugrohr 34 zusammen mit einer Saugpumpe dient dem Zweck, die sich auf dem Boden des Auffangbeckens 30 sammelnde Waschflüssigkeit abzusaugen und über einen Ölabscheider 35 und einen nachgeschalteten Filter 36 in denjenigen Tank 37 zu befördern, aus welchem die gereinigte Waschflüssigkeit erneut dem Waschkreislauf zugeführt wird.

Zu diesem Zweck dient eine Dosierpumpe 38, die den aus einem separaten Tank angesaugten Waschzusatz 39 über einen entsprechenden Zulauf den Wasseraustrittsdüsen an den Portalmast 2,3 zuführt.

Es handelt sich demnach bei dieser Weiterbildung um ein geschlossenes Waschwassersystem, welches ebenfalls wie das gesamte Waschportal 23 mobil ausgelegt ist, so daß es praktisch an jedem Aufstellort des Waschportals 23 zum Einsatz kommen kann.

Es sei abschließend erwähnt, daß zur Führung der Sockel 9,10 und ihren Rollen 11 auf dem Untergrund auch mobil zu verlegende Schienen verwendet werden können, so daß eine zwangsläufige, parallel zum LKW führende Bewegungsrichtung des Waschportals 23 gegeben ist.

### Bezugszeichenliste:

- 1: PKW-Anhänger
- 2: Portalmast
- 3: Portalmast
- 4: Laufrad
- 5: Laufrad
- 6: Portalbogen
- 6l: linkes Portalbogenstück
- 6r: rechtes Portalbogenstück
- 6lo: linker oberer Portalbogen
- 6ro: rechter oberer Portalbogen
- 7: Gelenk
- 8: Gelenk
- 9: Sockel
- 10: Sockel
- 11: Rolle
- 12: Endbereich von 9
- 13: Endbereich von 10
- 14: Knickgelenk
- 15: Knickgelenk
- 18: Deichsel
- 19l: Kopfbürste links
- 19r: Kopfbürste rechts
- 20: Seitenbürste
- 21: Seitenbürste
- 22: Drehachse
- 23: Waschportal
- 24: Gelenk
- 25l: Portalbogenplatz links
- 25r: Portalbogenplatz rechts
- 26l: Drehachse, Kopfbürste, links
- 26r: Drehachse, Kopfbürste, rechts
- 27l: Drehachse linke Seitenbürste
- 27r: Drehachse rechte Seitenbürste
- 30: Auffangbecken
- 31: Boden
- 32: Fahrbahn
- 33: Umrandung
- 34: Absaugrohr
- 35: Ölabscheider
- 36: Filter
- 37: Tank
- 38: Dosierpumpe
- 39: Waschzusatz
- 40: Kugelkopf
- 50: Auffahrrampe
- 100: Maschinengestell

## Patentansprüche

1. Vorrichtung zur Außenfläche von Kraftfahrzeugen, vorzugsweise von Lastkraftwagen sowie von deren Aufbauten, Anhängern oder Aufliegern, bestehend aus einem in Längsrichtung der Kraftfahrzeuge verfahrbaren Maschinengestell mit mindestens einem sich in Gebrauchslage seitlich neben dem Kraftfahrzeug befindlichen und aufrecht erstreckenden Portalmast und mit einem am Portalmast kopfseitig angeordneten Portalbogen, wobei der Portalmast mindestens eine drehbar gelagerte Seitenbürste mit in Gebrauchsstellung im wesentlichen vertikal verlaufender Drehachse und der Portalbogen eine um eine horizontale Achse drehbar gelagerte Kopfbürste aufweist, und wobei die mindestens eine Seitenbürste und die Kopfbürste über Düsen mit Waschflüssigkeit beaufschlagbar sind und wobei Antriebsmotoren zum Antreiben der Bürste und zum Verfahren des Maschinengestells vorgesehen sind, **dadurch gekennzeichnet, daß** der Portalmast (2;3) zwischen einer liegenden und einer stehenden Position verschwenkbar an dem Maschinengestell angeordnet ist, und daß das Maschinengestell ortsunabhängig auf festem Boden verfahrbar ist und darüber hinaus entweder Bestandteil eines mit zumindest einer luftbereiften Achse verbundenen Fahrgestells eines für den öffentlichen Strassenverkehr zugelassenen Anhängers ist oder mit einigen wenigen Handgriffen mit einem derartigen Fahrgestell verbind- und davon wieder lösbar ist.

2. Vorrichtung nach Anspruch 1, **dadurch gekennzeichnet, daß** zwei seitlich und parallel zueinander angeordnete Portalmasten (2,3) vorgesehen sind und daß der Abstand der beiden Portalmasten (2,3) zueinander veränderbar ist.

3. Vorrichtung nach Anspruch 1 oder 2, **dadurch gekennzeichnet, daß** das Maschinengestell zwei zueinander beabstandete Sockel (9,10) aufweist und die Sockel (9,10) Rollen (11) oder Räder zum Verfahren des Waschportals (23) während des Reinigungsvorgangs aufweisen.

4. Vorrichtung nach Anspruch 3, **dadurch gekennzeichnet, daß** die Sockel (9,10) Teile des Fahrgestells des für den öffentlichen Verkehr zugelassenen Kraftfahrzeug-Anhängers (1) sind.

5. Vorrichtung nach Anspruch 3, **dadurch gekennzeichnet, daß** an den Sockeln (9,10) oder an den Portalmasten (2,3) für den öffentlichen Straßenverkehr zugelassene Laufräder (4,5) wie bei einem Anhänger (1) befestigt sind.

6. Vorrichtung nach Anspruch 4 oder 5, **dadurch gekennzeichnet, daß** die Sockel (9,10) an ihrem dem ziehenden Fahrzeug zugewandten Endbereich (12,13) jeweils ein Gelenk (14,15) zum Hochklappen des Sockelendes aufweisen.

7. Vorrichtung nach einem der Ansprüche 3 bis 5, **dadurch gekennzeichnet, daß** das Fahrzeuggestell (100) eine Deichsel (18) aufweist zum Anhängen des Anhängers (1) an ein ziehendes Kraftfahrzeug , und daß die Deichsel (18) in der Betriebsstellung des Waschportals (23) aus der Fahrbahn des zu waschenden Fahrzeugs herausbewegbar ist.

8. Vorrichtung nach einem der Ansprüche 1 bis 7, **dadurch gekennzeichnet, daß** der Portalbogen (6) derart um eine horizontale Schwenkachse gelenkig mit den Portalmasten (2,3) verbunden ist, daß er um einen Winkel von bis zu 180° relativ zur Längserstreckung der Portalmasten (2,3) verschwenkbar ist.

9. Vorrichtung nach einem der Ansprüche 1 bis 8, **dadurch gekennzeichnet, daß** die Kopfbürste (19) in Längsrichtung der Portalmasten (2,3) verfahrbar im Waschportal (23) angeordnet ist.

10. Vorrichtung nach einem der Ansprüche 1 bis 9, **dadurch gekennzeichnet, daß** die Kopfbürste (19) in Halteeinrichtungen der Portalmasten (2,3) herausnehmbar einsetzbar ist.

11. Vorrichtung nach Anspruch 10, **dadurch gekennzeichnet, daß** mehrere Halteeinrichtungen jeweils paarweise in unterschiedlichen Höhenlagen der Portalmasten (2,3) angeordnet sind.

12. Vorrichtung nach einem der Ansprüche 1 bis 11, **dadurch gekennzeichnet, daß** die Kopfbürste (19) mittels eines oder mehrerer Kreuz- oder Knickgelenke (24) zusammenlegbar ausgebildet ist.

13. Vorrichtung nach einem der Ansprüche 1 bis 11, **dadurch gekennzeichnet, daß** die Kopfbürste (19) eine aus axialen Schiebestücken nach Art einer Pinole zusammengesetzte Achse aufweist.

14. Vorrichtung nach einem der Ansprüche 1 bis 12, **dadurch gekennzeichnet, daß** die Seitenbürsten (20, 21) pendelnd im Waschportal (23) gelagert sind.

15. Vorrichtung nach einem der Ansprüche 1 bis 14, **dadurch gekennzeichnet, daß** die Gelenke, Antriebe und Lager des Waschportals (23) und der Bürsten (19,20,21) vollständig gegen das Eindringen von Waschflüssigkeit geschützt sind.

16. Vorrichtung nach einem der Ansprüche 1 bis 15, **dadurch gekennzeichnet, daß** der Abstand der Sockel (9,10) bzw. der Portalmasten (2,3) voneinander mittels eines oder mehrerer manuell oder motorisch antreibbarer Trieborgane veränderbar ist.

17. Vorrichtung nach einem der Ansprüche 1 bis 16, **dadurch gekennzeichnet, daß** die Portalmasten (2,3) und/oder der Portalbogen (6) als Fachwerkkonstruktionen ausgebildet sind.

18. Vorrichtung nach Anspruch 17, **dadurch gekennzeichnet, daß** die Fachwerkkonstruktionen zumindest teilweise einen U-förmigen Querschnitt aufweisen, dessen offene Seite dem zu waschenden Fahrzeug zugewandt ist.

19. Vorrichtung nach einem der Ansprüche 1 bis 18, **dadurch gekennzeichnet, daß** die Antriebe zum Verfahren des Waschportals (23), zum Antreiben der Bürsten (19,20,21) und Trieborgane, zum Verfahren der Kopfbürste (19), zum Verschwenken der Portalmasten (2,3) und/oder zum Hochklappen der Holmenden (12,13) zumindest teilweise als Pneumatikmotoren ausgebildet sind.

20. Vorrichtung nach einem der Ansprüche 1 bis 19, **dadurch gekennzeichnet, daß** die Düsen zur Beaufschlagung der Bürsten (19,20,21) bzw. des LKWs mit Waschflüssigkeit wahlweise mit Reinigungsflüssigkeit, Spülwasser und/oder einer Hydrophobierungsflüssigkeit betreibbar sind.

21. Vorrichtung nach einem der Ansprüche 1 bis 20, **dadurch gekennzeichnet, daß** die Portalmasten (2,3) und/oder der Portalbogen (6) Blasleisten zum Abblasen von Waschflüssigkeit aufweisen.

22. Vorrichtung nach einem der Ansprüche 1 bis 21, **dadurch gekennzeichnet, daß** das Waschportal (23) Absaugeinrichtungen zum Auffangen bzw. Absaugen von Waschflüssigkeit aufweist.

23. Verfahren zum Gebrauch einer Vorrichtung nach dem Oberbegriff des Anspruchs 1, **dadurch gekennzeichnet, daß** - ausgehend von der Gebrauchsstellung in welcher die Fahrzeugwäsche erfolgt - die Portalmasten (2,3) aus einer vertikalen in eine horizontale Lage verschwenkt und der Abstand der Portalmasten (2,3) zueinander soweit verringert wird, daß die zulässige Anlagenbreite eines PKW-Anhängers nicht überschritten wird und daß in dieser Transportstellung die Vorrichtung nach Art eines Fahrzeug-Anhängers zum nächsten Einsatzort verbracht wird, wo durch eine Abstandsvergrößerung und ein Aufrichten der Portalmasten erneut die Gebrauchsstellung eingenommen wird.
